# EUROPÄISCHE PATENTSCHRIFT

(11) **EP 0 963 521 B1**
(45) Veröffentlichungstag und Bekanntmachung des Hinweises auf die Patenterteilung: **10.04.2002**
(21) Anmeldenummer: 98910620.8
(22) Anmeldetag: 11.02.1998
(51) Int. Cl.: F16F 3/087

(54) **ELEMENT FÜR DAS ABSORBIEREN KINETISCHER ENERGIE**
KINETIC ENERGY ABSORBING ELEMENT
ELEMENT SERVANT A ABSORBER L'ENERGIE CINETIQUE

(30) Priorität: 25.02.1997 DE 19707434
(43) Veröffentlichungstag der Anmeldung: 15.12.1999
(73) Patentinhaber: Ringfeder VBG GmbH, 47807 Krefeld (DE)
(72) Erfinder: DETZNER, Friedhelm, D-47239 Duisburg (DE)
(86) Internationale Anmeldenummer: DE9800394
(87) Internationale Veröffentlichungsnummer: WO9838438

(56) Entgegenhaltungen:
- US-A- 2 670 200
- US-A- 3 784 181
- US-A- 4 348 015
- US-A- 4 566 678
- US-A- 5 529 327
- US-A- 5 791 637

## Beschreibung

Die Erfindung betrifft ein Element für das Absorbieren kinetischer Energie, das mechanisch nach dem Prinzip der plastischen Verformung arbeitet.

Durch die DE-OS 19 21 049 ist ein mechanisch arbeitendes Absorbtionselement bekannt, das aus mindestens zwei teleskopierenden Hohlzylindern mit sich überlappenden Durchmessern besteht. Die Energieabsorbtion wird dadurch erreicht, daß sich die Hohlzylinder während ihres Zusammenschiebens nach außen bzw. nach innen plastisch verformen. Die DE-OS 29 49 677 zeigt als Anwendungsmöglichkeit eines solchen Elements dessen Einsatz als Stoßverzehrglied innerhalb einer Mittelpufferkupplung eines Schienenfahrzeuges. Bei dem bekannten Absorbtionselement werden insbesondere die im Kraftfluß befindliche große Bauteillänge und der erhebliche Fertigungsaufwand (enge Maßtoleranzen) als nachteilig angesehen. Weiter ungünstig ist das hohe Gewicht des bekannten Elements, das aus einer im Hinblick auf ein brauchbares Arbeitsvermögen erforderlichen Verwendung von Stahl für die Hohlkörper resultiert.

Eine durch die US-A-3 784 181 bekannte Energie absorbierende Vorrichtung ist hinsichtlich der Gestaltung und ihres Werkstoffs derart ausgelegt, daß die Vorrichtung nach Wegfall der Stoßbelastung in ihre ursprüngliche Gestalt zurückkehrt. Hierbei handelt es sich also um eine Vorrichtung, die nicht nach dem Prinzip der plastischen Verformung arbeitet und folglich ein vergleichsweise geringes Arbeitsvermögen hat.

Zum Stand der Technik gehören ferner energieumwandelnde Systeme, die vor allem im Stoßfängerbereich von Fahrzeugen eingesetzt werden, um bis hin zu vorgegebenen Aufprallgeschwindigkeiten von z. B. 8 km/h fahrzeugseitige Beschädigungen zu vermeiden. Derartige Systeme beinhalten reversible hydraulische Dämpfer, die in bezug auf Herstellung und Wartung technisch aufwendig und dadurch relativ teuer sind und ein beträchtliches Gewicht haben, oder plastisch verformbare, also nicht reversible Körper, wie beispielsweise Waben aus Aluminium, die in der Regel sehr schwierig zu berechnen sind.

Der Erfindung liegt die Aufgabe zugrunde, ein kostengünstig herstellbares, leichtes, berechenbares und in der Handhabung einfaches Element zu schaffen, das kinetische Energie auf besonders kleinem Raum absorbiert und ein gleichbleibendes Arbeitsverhalten im gesamten Einsatzzeitraum hat.

Diese Aufgabe wird erfindungsgemäß dadurch gelöst, daß das Element aus zumindest einem blockförmigen Abschnitt eines dickwandigen Rohres aus Kunststoff gebildet ist, wobei dieser blockförmige Abschnitt aus Kunststoff einen oberhalb der üblichen Anwendungstemperaturen des Elements liegenden Einfrierpunkt, eine dem Hookeschen Gesetz entsprechende Anfangselastizität und - bezogen auf das Kraft-Weg-Diagramm - einen nahezu rechteckförmigen plastischen Arbeitshub aufweist.

Vorteilhafte Ausgestaltungen der Erfindung sind in den Unteransprüchen angegeben.

Das erfindungsgemäße Absorbtionselement ist grundsätzlich überall dort einsetzbar, wo beim Eintreten eines selten vorkommenden Überlastfalles größerer Schaden an wertvollen Gegenständen vermieden werden soll. Das Absorbtionselement eignet sich beispielsweise als Energieverzehrer hinter einer Fahrzeugkupplung oder hinter einer Fahrzeugstoßstange.

Das Absorbtionselement nach der Erfindung kann den Forderungen des jeweiligen Einsatzfalles durch die Variierbarkeit seiner Bauteilgeometrie auf einfache Weise angepaßt werden: Die Höhe des blockförmigen Abschnitts des dickwandigen Kunststoffrohres ist maßgebend für die Länge des Federweges, der radialen Ausdehnung im Falle einer Kraftbeaufschlagung und des Krafteinbruchs, wenn die Außenkontur des blockförmigen Abschnitts beim Stauchen über 45° geneigt ist. Die Wandung des blockförmigen Abschnitts reduziert mit steigender Dicke den relativ zur Verfügung stehenden Federweg und steigert den Kraftanstieg über den Zustand der Streckspannung. Schließlich ist der Querschnitt des dickwandigen Abschnittes maßgebend für die Höhe des elastischen Kraftanstiegs.

Aus der Anfangselastizität des Absorbtionselements ergibt sich einerseits ein in vielen Anwendungsfällen günstiger Deformationsschutz bei kleinen Stößen, andererseits ist dadurch die Möglichkeit geschaffen, den blockförmigen Abschnitt mit anderen Bauteilen zu verspannen, so daß kleinere Berührungsstöße noch kein Längsspiel verursachen. Nach einem Arbeitshub über die Streckgrenze hinaus liegt eine plastische Verformung des blockförmigen Abschnitts vor, der dann ersetzt werden sollte, weil dann je nach Verfomungsgrad nicht mehr die maximal mögliche Energieaufnahme zur Verfügung steht. Statische und dynamische Kennlinien sind annähernd gleich, lediglich die Diagrammvölligkeit nimmt dynamisch zu. Zur Überprüfung der vorher berechneten Eigenschaften sind keine aufwendigen dynamischen Tests erforderlich.

Ausführungsbeispiele der Erfindung sind in der Zeichnung dargestellt und werden im folgenden näher beschrieben.
Es zeigen
- Fig. 1A: ein erfindungsgemäßes Element für das Absorbieren kinetischer Energie im Neu-Zustand,
- Fig. 1B: das Element nach Fig. 1A nach einer plastischen Verformung,
- Fig. 2: das typische Kraft-Weg-Diagramm einer aus drei Elementen nach Fig. 1A und Fig. 1B gebildeten Säule,
- Fig. 3: das Element nach Fig. 1A innerhalb einer montagebereiten Stoßverzehr-Einheit,
- Fig. 4: eine der Fig. 3 ähnliche Anordnung, jedoch mit zwei Elementen nach Fig. 1A,
- Fig. 5: eine aus fünf Elementen nach Fig. 1A bestehende Säule innerhalb einer weiteren Anordnung.

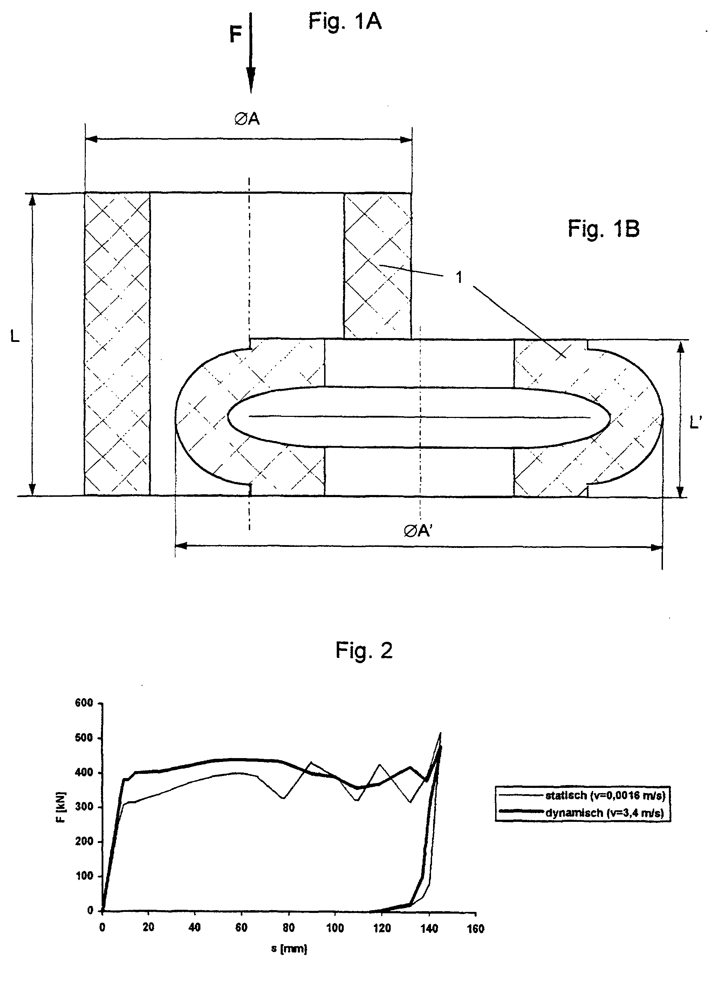

Gemäß Fig. 1A ist das Absorbtionselement aus einem blockförmigen Abschnitt 1 eines dickwandigen Rohres aus Kunststoff gebildet, wobei dieser Abschnitt 1 die Länge L und den Außendurchmesser A aufweist. Geeignet für den blockförmigen Abschnitt 1 sind Kunststoffe mit ausreichender Zähigkeit - das Absorbtionselement soll bei Belastung ja nicht zersplittern - und einem Einfrierpunkt oberhalb der üblichen Anwendungstemperaturen.

Wie das Diagramm nach Fig. 2 zeigt, hat der blockförmige Abschnitt 1 eine Anfangselastizität. Bei Belastung über die Streckgrenze hinaus verformt sich der blockförmige Abschnitt 1, bis er die in Fig. 1B gezeigte plastisch verformte Gestalt (voller Arbeitshub) mit der reduzierten Länge L' und dem bauchig vergrößerten Außendurchmesser A' annimmt. Am Ende des vollen Arbeitshubes berühren sich die quer zur Kraftrichtung F innerhalb des Bauches verlaufenden Flächen (siehe die Kraftspitze des Diagramms nach Fig. 2); der torusförmige Freiraum innerhalb des blockförmigen Abschnitts 1 entsteht nach Absorbieren der Belastung durch elastische Rückfederung, wie dies dem Diagramm ebenfalls zu entnehmen ist.

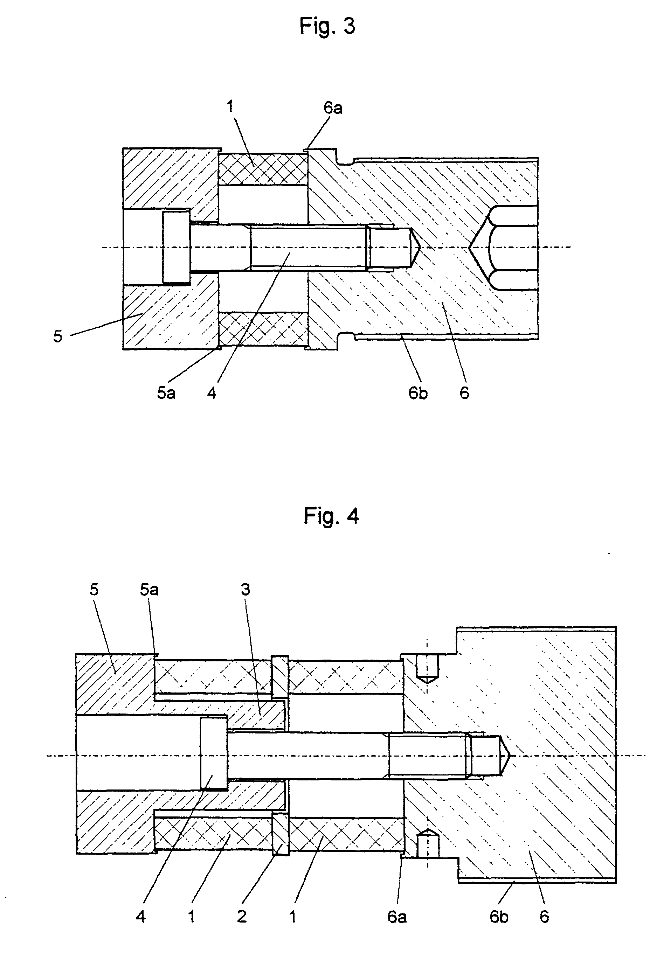

In der Anordnung nach Fig. 3 ist das aus einem einzigen blockförmigen Abschnitt 1 bestehende Absorbtionselement über einen innenliegenden Schraubenbolzen 4 zwischen einem Druckstück 5 und einem Anschlußstück 6 gehalten und entsprechend den Bedingungen des Anwendungsfalles vorspannbar. Das Anschlußstück 6 kann über ein im Ausführungsbeispiel gewähltes Außengewinde 6b in eine vor Überlastung zu bewahrende Baugruppe, z. B. eine Werkzeugmaschine, eingeschraubt werden. Die zu verzehrende Stoßkraft wird über das Druckstück 5 eingeleitet. Als Führung für den blockförmigen Abschnitt 1 können das Druckstück 5 und das Anschlußstück 6 jeweils mit einem Bund 5a bzw. 6a verbunden sein.

Gemäß Fig. 4 bilden zwei der blockförmigen Abschnitte 1 eine Säule mit einer dazwischen angeordneten Platte 2, wobei eine Klebeverbindung zwischen den Abschnitten 1 und der Platte 2 sinnvoll ist. Das Druckstück 5 hat einen in die Säule eingreifenden Rundkörper 3, der mit der Platte 2 im Sinne einer inneren Führung zusammenwirkt. Das Halten und ggf. auch Vorspannen der Säule zwischen dem Druckstück 5 und dem Anschlußstück 6 erfolgt wiederum mit Hilfe eines innenliegenden Schraubenbolzens 4.

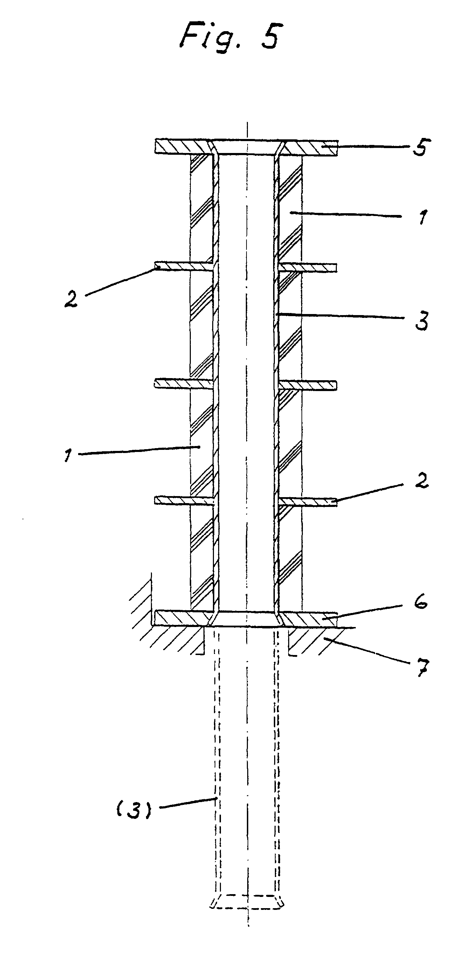

In Fig. 5 ist die Möglichkeit dargestellt, eine aus vier blockförmigen Abschnitten 1 bestehende Säule mit einer entsprechenden Anzahl von Zwischenplatten 2 durch einen rohrförmigen Rundkörper 3 zu führen. Das Zusammenhalten und ggf. auch Vorspannen der Säule wird über die gezeigte formschlüssige Verbindung des rohrförmigen Rundkörpers 3 (hier durch Aufbördeln) mit dem Druckstück 5 und dem Anschlußstück 6 erreicht. Es versteht sich, daß hinter dem mit der zu sichernden Baugruppe 7 verbundenen Anschlußstück 6 Raum für das Eintauchen des Rundkörpers 3 vorhanden sein muß, wie dies mit gestrichelten Linien gezeichnet ist.

Im übrigen ist der Fig. 5 die Möglichkeit zu entnehmen, die Säule über die entsprechend größer dimensionierten Platten 2 an hier nicht dargestellten Bauteilen zu führen, die sich außerhalb der Säule befinden. Der Rundkörper 3 kann dann entfallen. Eine derartige Außenführung ist auch bei dem Ausführungsbeispiel nach Fig. 4 realisierbar.

### Liste der Bezugszeichen

- 1: rohrförmiger Abschnitt eines dickwandigen Kunststoffrohres
- 2: Zwischenplatte
- 3: Rundkörper
- 4: Schraubenbolzen
- 5: Druckstück
- 5a: Führungsbund
- 6: Anschlußstück
- 6a: Führungsbund
- 6b: Außengewinde
- 7: zu schützende Baugruppe

- F: Wirkrichtung der zu absorbierenden Stoßkraft
- L, A: Länge bzw. Außendurchmesser des rohrförmigen Abschnitts 1 im Neu-Zustand
- L',A': Länge bzw. Außendurchmesser des rohrförmigen Abschnitts 1 nach plastischer Verformung

## Patentansprüche

1. Element für das Absorbieren kinetischer Energie, das mechanisch nach dem Prinzip der plastischen Verformung arbeitet, **dadurch gekennzeichnet, daß** das Element aus zumindest einem blockförmigen Abschnitt (1) eines dickwandigen Rohres aus Kunststoff gebildet ist, wobei dieser blockförmige Abschnitt (1) aus Kunststoff einen oberhalb der üblichen Anwendungstemperaturen des Elements liegenden Einfrierpunkt, eine dem Hookeschen Gesetz entsprechende Anfangselastizität und - bezogen auf das Kraft-Weg-Diagramm - einen nahezu rechteckförmigen plastischen Arbeitshub aufweist.

2. Element nach Anspruch 1, **dadurch gekennzeichnet, daß** zwei oder mehrere der blockförmigen Abschnitte (1) des dickwandigen Kunststoffrohres eine Säule bilden, wobei zwischen den blockförmigen Abschnitten (1) jeweils eine Platte (2) angeordnet ist.

3. Element nach Anspruch 2, **dadurch gekennzeichnet, daß** jede Platte (2) mit einem in die Säule eingreifenden Rundkörper (3) im Sinne einer Führung zusammenwirkt.

4. Element nach Anspruch 2, **dadurch gekennzeichnet, daß** jede Platte (2) an außerhalb der Säule befindlichen Bauteilen geführt ist.

5. Element nach einem der Ansprüche 1 bis 4, **dadurch gekennzeichnet, daß** der blockförmige Abschnitt (1) des dickwandigen Kunststoffrohres (1) bzw. die Säule mit Hilfe des Rundkörpers (3) und/oder über einen innenliegenden Schraubenbolzen (4) gehalten und bei Bedarf vorspannbar ist.

## Claims

1. An element for absorbing kinetic energy, operating mechanically according to the principle of plastic deformation, **characterised in that** the element is formed from at least one block-shaped portion (1) of a thick-walled plastics pipe, wherein this block-shaped plastics portion (1) has a glass transition point lying above the normal application temperatures of the element, an initial elasticity conforming to Hooke's law and, based on the force/path graph, a virtually rectangular plastic working stroke.

2. An element according to claim 1, **characterised in that** two or more of the block-shaped portions (1) of the thick-walled plastics pipe form a column, a plate (2) being arranged between each of the block-shaped portions (1).

3. An element according to claim 2, **characterised in that** each plate (2) co-operates with a cylindrical body (3), engaging in the column, in the manner of a guide.

4. An element according to claim 2, **characterised in that** each plate (2) is guided on components arranged outside the column.

5. An element according to any one of claims 1 to 4, **characterised in that** the block-shaped portion (1) of the thick-walled plastics pipe (1) or column is held by means of the cylindrical body (3) and/or by an internal screw bolt (4) and can be pretensioned as required.

## Revendications

1. Elément servant à absorber l'énergie cinétique dont le fonctionnement mécanique a lieu selon le principe de la déformation plastique, **caractérisé en ce que** l'élément est formé au moins d'une section en forme de bloc (1) d'un tube en matériau synthétique à paroi épaisse, cette section en forme de bloc (1) en matériau synthétique ayant un point de solidification situé au-dessus des températures normales d'utilisation de l'élément, une élasticité de départ conforme à la loi de Hooke et - rapportée au diagramme puissance-trajet - une course de travail plastique pratiquement rectangulaire.

2. Elément selon la revendication 1, **caractérisé en ce que** deux ou plusieurs des sections en forme de bloc (1) du tube en matériau synthétique à paroi épaisse forment une colonne, une plaque (2) étant respectivement disposée entre les sections en forme de bloc (1).

3. Elément selon la revendication 2, **caractérisé en ce que** chaque plaque (2) agit de concert avec une partie ronde en forme de tube (3) pénétrant dans la colonne pour assurer un guidage.

4. Elément selon la revendication 2, **caractérisé en ce que** chaque plaque (2) est guidée sur des composants se trouvant en dehors de la colonne.

5. Elément selon l'une des revendications 1 à 4, **caractérisé en ce que** la section en forme de bloc (1) du tube en matériau synthétique à paroi épaisse (1) ou la colonne est maintenue ou peut, en cas de nécessité, être mise sous précontrainte à l'aide de la partie ronde en forme de tube (3) et/ou d'un boulon (4) se trouvant à l'intérieur.
